# EUROPÄISCHE PATENTSCHRIFT

(11) **EP 3 814 207 B1**
(45) Veröffentlichungstag und Bekanntmachung des Hinweises auf die Patenterteilung: **10.05.2023**
(21) Anmeldenummer: 19724789.3
(22) Anmeldetag: 14.05.2019
(51) Int. Cl.: B62J 9/00, B62K 19/46, B62J 9/14

(54) **GRÄTSCHSITZFAHRZEUG MIT STAUFACH**
STRADDLE-TYPE VEHICLE WITH STOWAGE COMPARTMENT
VÉHICULE À POSITION À CALIFOURCHON AVEC COFFRE DE RANGEMENT

(30) Priorität: 26.06.2018 DE 102018210355
(43) Veröffentlichungstag der Anmeldung: 05.05.2021
(73) Patentinhaber: Bayerische Motoren Werke Aktiengesellschaft, 80809 München (DE)
(72) Erfinder: WINKLER, Angelika, 85630 Grasbrunn (DE); HIRN, Armin, 82061 Neuried (DE); HOFER, Gerhard, 85376 Giggenhausen (DE); HUTTERER, Philipp, 81547 München (DE); WEBER, Marc, 85748 Garching (DE)
(86) Internationale Anmeldenummer: PCT/EP2019/062330
(87) Internationale Veröffentlichungsnummer: WO 2020/001843

(56) Entgegenhaltungen:
- EP-A1- 3 088 287
- EP-A2- 1 557 348
- US-A1- 2004 195 855

## Beschreibung

Die Erfindung betrifft ein Neigefahrzeug mit mindestens einem Staufach, das in oder an einem Fahrzeuggehäuse anordenbar ist und das mindestens einen Hohlraum und mindestens eine, den Hohlraum von außen zugänglich machende Öffnung umfasst, mit mindestens einem Abdeckmittel, das in einer Verschlussstellung die Öffnung des Staufachs zumindest nahezu in Gänze überfängt und das in einer Freigabestellung die Öffnung nach außen freigibt und mit mindestens eine Unterstützungseinheit, durch die das Überführen des Abdeckmittels von der Verschlussstellung in die Freigabestellung und/oder umgekehrt durch eine Unterstützungskraft zumindest unterstützbar ist, wobei das Staufach bezüglich der Längsrichtung des Neigefahrzeugs seitlich zugänglich ist und wobei die Unterstützungseinheit mindestens ein Dämpferelement und mindestens ein Federelement umfasst.

Neigefahrzeuge sind beispielsweise in Form von Motorrädern oder Rollern bekannt. Um Gegenstände zu bevorraten, können bekannte Neigefahrzeuge ein Staufach umfassen, das beim Betrieb des Neigefahrzeugs durch eine als Abdeckelement ausgebildete Sitzbank nach außen geschlossen ist. Um Zugriff auf das Staufach zu erhalten, wird die Sitzbank beispielsweise um eine Drehachse gedreht und ein Motorradhelm, Bekleidungsstück oder Dergleichen in dem Staufach abgelegt.

Darüber hinaus sind Neigefahrzeuge bekannt, bei denen das Abdeckelement und die Sitzbank zwei voneinander separate oder separierbare Bauteile umfassen.

Ein Neigefahrzeug, bei dem das Staufach bezüglich der Längsrichtung von hinten aus zugänglich ist, ist bekannt aus EP 1 557 348 A2. Dokument EP 1 557 348 A2 zeigt den Oberbegriff des Anspruchs 1.

Ein Neigefahrzeug mit einem bezüglich der Längsrichtung seitlich zugänglichen Staufach ist bekannt aus EP 3 088 287 A1.

Bei den bekannten Neigefahrzeugen kann sich ein manuelles Überführen des Abdeckmittels von der Verschlussstellung in die Freigabestellung und/oder umgekehrt als umständlich erweisen, insbesondere wenn der Bediener hierfür nur eine Hand frei hat.

Eine Aufgabe eines Ausführungsbeispiels der Erfindung ist, ein Neigefahrzeug vorzuschlagen, bei dem das Überführen des Abdeckmittels von der Verschlussstellung in die Freigabestellung und/oder umgekehrt, erleichtert ist.

Diese Aufgabe wird bei einem eingangs genannten Neigefahrzeug gelöst durch mindestens ein Rahmenmittel, das an der Öffnung des Staufachs festlegbar ist und das eine Aufnahme für die Unterstützungseinheit und/oder das Führungsmittel bildet, wobei das Rahmenmittel ein Dichtelement umfasst, das den Hohlraum des Staufachs zumindest in der Verschlussstellung des Abdeckelements zumindest nahezu vollumfänglich umgibt.

Die Unterstützungseinheit und/oder das Führungsmittel können am Fahrzeuggehäuse oder am Staufach festgelegt sein. Unterstützungseinheit und/oder Führungsmittel lassen sich durch das Rahmenmittel auf einfache Art und Weise an unterschiedlichen Staufächern festlegen. Solchenfalls können Unterstützungseinheit und/oder Führungsmittel auf einfache Weise an Staufächern nachgerüstet werden.

Durch das Dichtelement Solchenfalls kann ein Eindringen von Verschmutzung oder Feuchtigkeit innerhalb des Staufaches, zumindest in der Verschlussstellung des Abdeckelements vorgebeugt werden. Hierbei erweist es sich insbesondere als vorteilhaft, wenn das Dichtelement voll umfänglich zwischen Abdeckelement und Staufach ausgebildet ist.

Durch das Vorsehen einer Unterstützungseinheit ist ein einhändiges manuelles Bedienen des Staufachs, insbesondere des Abdeckmittels, erleichtert.

Unter einem Neigefahrzeug werden Fahrräder, Motorräder oder Motorradähnliche Kraftfahrzeuge, wie Motorroller, insbesondere zwei-, drei- oder vierrädrige Motorroller, Scooter, neigbare Trikes, Quads oder Dergleichen verstanden.

Das Staufach ist bezüglich der Längsrichtung des Fahrzeugs seitlich zugänglich. Das Abdeckmittel kann grundsätzlich beliebig ausgebildet sein, beispielsweise klappenartig, schiebetürartig oder rolloartig.

Dadurch, dass die Unterstützungseinheit ein Dämpferelement umfasst, wird insbesondere bei einem Überführen des Abdeckmittels von der Verschlussstellung in die Freigabestellung mit einer Unterstützungskraft der Bewegung von der Verschlussstellung in die Freigabestellung entgegengewirkt. Hierdurch ist ein Überführen des Abdeckmittels von der Verschlussstellung in die Freigabestellung verlangsamt. Dieses erweist sich insbesondere insofern als vorteilhaft, dass zwischen dem Abdeckelement und dem Staufach angeordnete Führungselemente, wie Schienen, Gelenke oder Scharniere entlastbar sind und hierdurch deren Verschleiß reduziert ist.

Dadurch, dass die Unterstützungseinheit ein Federelement umfasst, kann das Abdeckmittel beispielsweise in die Verschlussstellung oder in die Freigabestellung vorgespannt sein. Wenn das Abdeckmittel in die Verschlussstellung vorgespannt ist, wird das Abdeckmittel automatisch von der Freigabestellung in die Verschlussstellung überführt, wenn ein manuelles Betätigen des Abdeckmittels beendet ist. Ferner, wenn das Abdeckmittel durch das Federelement in die Freigabestellung vorgespannt ist, wird das Abdeckmittel automatisch von der Verschlussstellung in die Freigabestellung überführt, sobald das Abdeckmittel aus der Verschlussstellung gelöst ist.

Es erweist sich als vorteilhaft, wenn die Unterstützungseinheit mindestens einen Antrieb umfasst.

Das Dämpferelement, das Federelement und/oder der Antrieb können mechanisch, elektromagnetisch, hydraulisch und/oder pneumatisch realisiert sein.

Bei Ausführungsformen der Unterstützungseinheit hat es sich als vorteilhaft herausgestellt, wenn das mindestens eine Dämpferelement der Unterstützungseinheit einen Öffnungsdämpfer, Rotationsdämpfer, Lineardämpfer und/oder eine Gasfeder umfasst, wenn das mindestens eine Federelement der Unterstützungseinheit mindestens eine Feder und/oder Spiralfeder umfasst und/oder wenn der mindestens eine Antrieb der Unterstützungseinheit mindestens eine Zahnstange, eine Seilumschlingung, einen Spindelantrieb, ein Formgedächtniselement und/oder einen Direktantrieb umfasst.

Solchenfalls ist die Unterstützungseinheit einfach und kostengünstig bereitstellbar.

Wenn die Unterstützungseinheit einen Antrieb umfasst, kann das Abdeckmittel ohne manuelles Zutun automatisch von der Verschlussstellung in die Freigabestellung, bzw. von der Freigabestellung in die Verschlussstellung automatisch überführt werden.

Darüber hinaus erweist es sich als vorteilhaft, wenn das Abdeckmittel an dem Staufach festlegbar ist und durch das das Überführen des Abdeckmittels von der Verschlussstellung in die Freigabestellung und/oder umgekehrt führbar ist.

Das Führungsmittel kann grundsätzlich beliebig ausgebildet sein, sofern es der technischen Funktion nachkommt, das Abdeckmittel von der Verschlussstellung in die Freigabestellung und/oder umgekehrt zu führen. Solchenfalls erweist es sich als vorteilhaft, wenn das Überführen des Abdeckmittels von der Verschlussstellung in die Freigabestellung und/oder umgekehrt eine Drehbewegung umfasst, wobei das Führungsmittel ein Gelenk, ein Scharnier, ein Mehrgelenkscharnier und/oder Bügelscharnier umfasst und/oder wenn das Überführen des Abdeckmittels von der Verschlussstellung in die Freigabestellung und/oder umgekehrt eine lineare Bewegung umfasst, wobei das Führungsmittel schienenartig oder stangenförmig ausgebildet ist.

Hierdurch ist auf einfache Weise ein Führungsmittel realisierbar.

Die Unterstützungseinheit kann an einer beliebigen Stelle angeordnet sein, sofern sie das Überführen des Abdeckmittels von der Verschlussstellung in die Freigabestellung und/oder umgekehrt unterstützt. Die Unterstützungseinheit kann zwischen Staufach und Führungsmittel angeordnet sein oder Element des Führungsmittels sein.

Es ist denkbar, dass das Abdeckmittel in der Verschlussstellung durch das Dämpfelement, das Federelement und/oder durch den Antrieb gehalten ist. Bei einer Ausführungsform ist vorgesehen, dass die Unterstützungseinheit mindestens ein Haltemittel umfasst, das das Abdeckelement in der Verschlussstellung am Staufach festlegt und/oder das bei Lösen des Abdeckelements aus der Verschlussstellung das Dämpferelement, das Federelement und/oder den Antrieb auslöst.

Solchenfalls ist ein unbeabsichtigtes Überführen des Abdeckelements aus der Verschlussstellung in die Freigabestellung vorgebeugt.

Bei einer Weiterbildung letztgenannter Ausführungsform erweist es sich als vorteilhaft, wenn das Haltemittel ein Drehfallschloss umfasst.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen des Neigefahrzeugs.

In der Zeichnung zeigt:
- Figur 1: Eine schematische perspektivische Seitenansicht auf ein erfindungsgemäßes Neigefahrzeug;
- Figur 2: Eine perspektivische Detailansicht auf ein erstes Ausführungsbeispiel des Neigefahrzeugs mit einer als Federelement ausgebildeten Unterstützungseinheit;
- Figur 3: Eine perspektivische Detailansicht auf ein zweites Ausführungsbeispiel des Neigefahrzeugs mit einer als Dämpferelement ausgebildeten Unterstützungseinheit;
- Figur 4: Eine perspektivische Detailansicht eines Haltemittels des Neigefahrzeugs;
- Figur 5: Eine perspektivische Seitenansicht auf ein drittes Ausführungsbeispiel des Neigefahrzeugs mit einem Rahmenmittel.

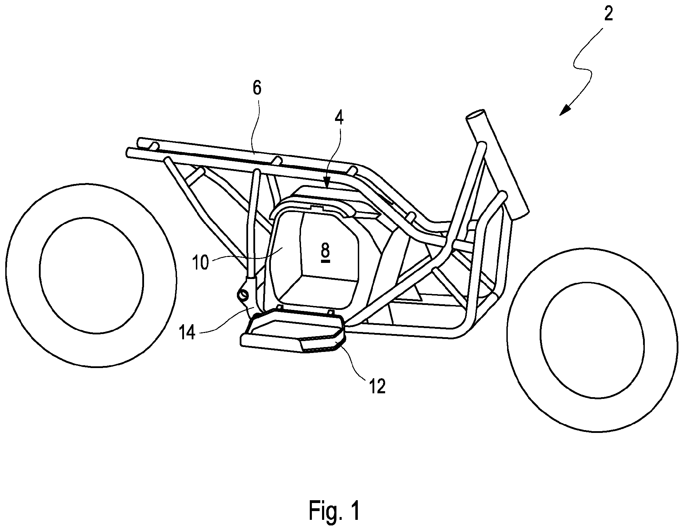

Figur 1 zeigt ein insgesamt mit dem Bezugszeichen 2 versehenes Neigefahrzeug in einer schematischen, seitlichen perspektivischen Ansicht.

Das Neigefahrzeug 2 umfasst ein Staufach 4, das in einem Fahrzeuggehäuse 6 (in Figur 1 nur schematisch angedeutet) anordenbar ist. Das Staufach 4 umfasst einen Hohlraum 8 und mindestens eine, den Hohlraum 8 von außen zugänglich machende Öffnung 10. Darüber hinaus umfasst das Neigefahrzeug 2 ein Abdeckmittel 12, das in einer Verschlussstellung die Öffnung 10 des Staufachs 4 zumindest nahezu in Gänze überfängt und das in einer Freigabestellung die Öffnung 10 nach außen freigibt. Figur 1 zeigt das Abdeckmittel 12 in einer Freigabestellung.

Darüber hinaus umfasst das Neigefahrzeug 2 eine Unterstützungseinheit 14, durch die das Überführen des Abdeckmittels 12 von der Verschlussstellung in die Freigabestellung und/oder umgekehrt durch eine Unterstützungskraft zumindest unterstützbar ist.

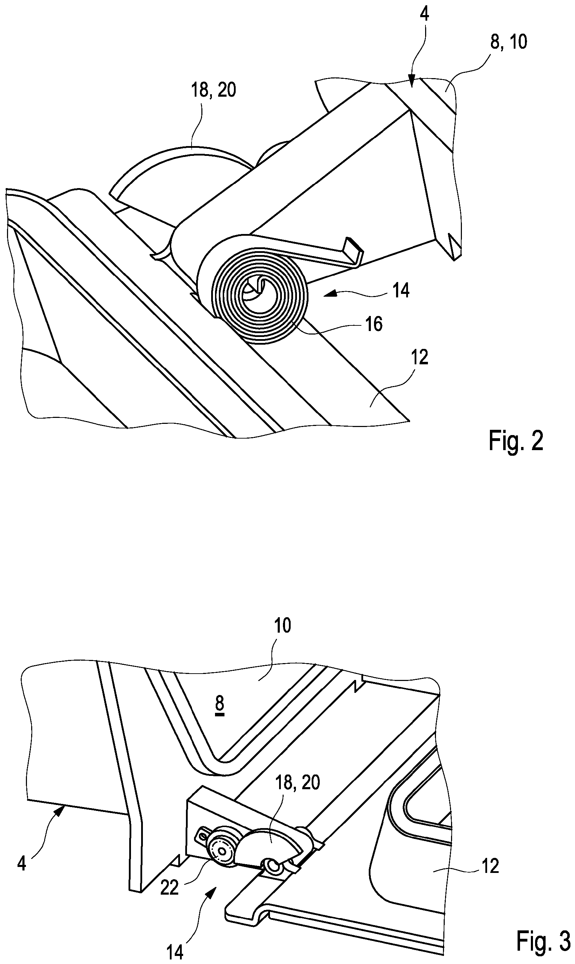

Figur 2 zeigt ein erstes Ausführungsbeispiel des Neigefahrzeugs 2, bei der die Unterstützungseinheit 14 durch ein Federelement 16 gebildet ist. Durch das Federelement 16 ist das Abdeckmittel 12 in die Verschlussstellung vorspannbar.

Darüber hinaus ist in Figur 2 ersichtlich, dass das Abdeckmittel 12 über ein als Gelenk 18 ausgebildetes Führungsmittel 20 mit dem Staufach 4 verbunden ist. Hierdurch ist das Überführen des Abdeckmittels 12 von der Verschlussstellung in die Freigabestellung und umgekehrt auf einfache Weise führbar.

Figur 3 zeigt ein zweites Ausführungsbeispiel des Neigefahrzeugs 2, bei dem die Unterstützungseinheit 14 durch ein Dämpferelement 22 ausgebildet ist.

Das in Figur 3 ersichtliche Dämpferelement 22 umfasst einen Rotationsdämpfer.

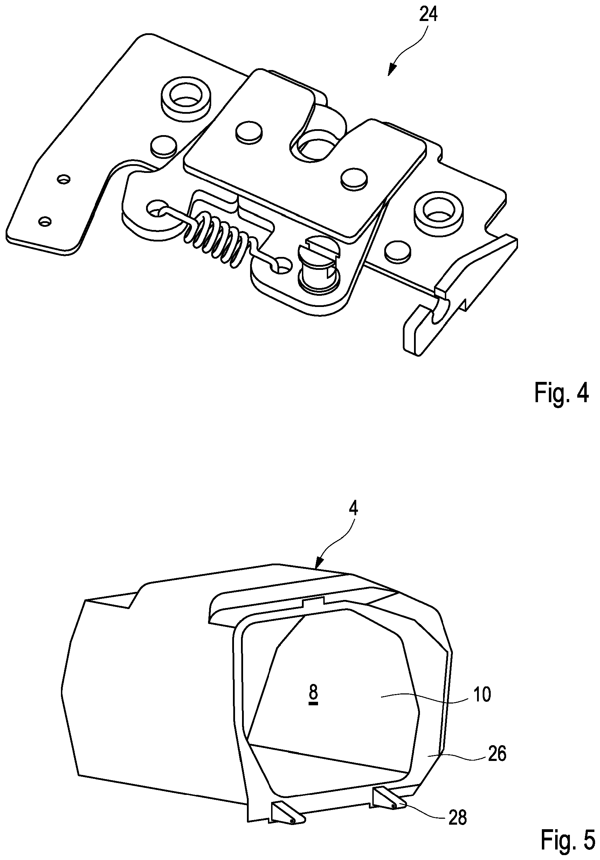

Figur 4 zeigt ein Haltemittel 24 des Neigefahrzeugs 2, das bei dem in Figur 4 gezeigten Ausführungsbeispiel als Drehfallschloss ausgebildet ist. Durch das Haltemittel 24 ist das Abdeckmittel 12 in der Verschlussstellung festlegbar.

Figur 5 zeigt ein drittes Ausführungsbeispiel des Neigefahrzeugs 2, bei der das Neigefahrzeug 2 ein Rahmenmittel 26 umfasst. Das Rahmenmittel 26 ist an der Öffnung 10 des Staufachs 4 festlegbar und bildet eine Aufnahme 28 für die Unterstützungseinheit 14. Bei dem in Figur 5 gezeigten Ausführungsbeispiel ist das Rahmenmittel 26 in das Staufach 4 angeclipst.

### Bezugszeichenliste

- 2: Neigefahrzeug
- 4: Stauchfach
- 6: Fahrzeuggehäuse
- 8: Hohlraum
- 10: Öffnung
- 12: Abdeckmittel
- 14: Unterstützungseinheit
- 16: Federelement
- 18: Gelenk
- 20: Führungsmittel
- 22: Dämpferelement
- 24: Haltemittel
- 26: Rahmenmittel
- 28: Aufnahme

## Patentansprüche

1. Neigefahrzeug (2) mit mindestens einem Staufach (4), das in oder an einem Fahrzeuggehäuse (6) anordenbar ist und das mindestens einen Hohlraum (8) und mindestens eine, den Hohlraum (8) von außen zugänglich machende Öffnung (10) umfasst, mit mindestens einem Abdeckmittel (12), das in einer Verschlussstellung die Öffnung (10) des Staufachs (4) zumindest nahezu in Gänze überfängt und das in einer Freigabestellung die Öffnung (10) nach außen freigibt, mit mindestens eine Unterstützungseinheit (14), durch die das Überführen des Abdeckmittels (12) von der Verschlussstellung in die Freigabestellung und/oder umgekehrt durch eine Unterstützungskraft zumindest unterstützbar ist, wobei die Unterstützungseinheit (14) mindestens ein Dämpferelement (22) und mindestens ein Federelement (16) umfasst, **dadurch gekennzeichnet, dass** das Staufach bezüglich der Längsrichtung des Neigefahrzeugs (2) seitlich zugänglich ist und **gekennzeichnet durch** mindestens ein Rahmenmittel (26), das an der Öffnung (10) des Staufachs (4) festlegbar ist und das eine Aufnahme (28) für die Unterstützungseinheit (14) und/oder das Führungsmittel (20) bildet, wobei das Rahmenmittel (26) ein Dichtelement umfasst, das den Hohlraum (8) des Staufachs (4) zumindest in der Verschlussstellung des Abdeckmittels (12) zumindest nahezu vollumfänglich umgibt.

2. Neigefahrzeug (2) nach Anspruch 1, **dadurch gekennzeichnet, dass** die Unterstützungseinheit (14) mindestens einen Antrieb umfasst.

3. Neigefahrzeug (2) nach Anspruch 1 oder 2, **dadurch gekennzeichnet, dass** das mindestens eine Dämpferelement (22) der Unterstützungseinheit (14) einen Öffnungsdämpfer, Rotationsdämpfer, Lineardämpfer und/oder eine Gasfeder umfasst, dass das mindestens eine Federelement (16) der Unterstützungseinheit (14) mindestens eine Feder und/oder Spiralfeder umfasst und/oder dass der mindestens eine Antrieb der Unterstützungseinheit (14) mindestens eine Zahnstange, eine Seilumschlingung, einen Spindelantrieb, ein Formgedächtniselement und/oder einen Direktantrieb umfasst.

4. Neigefahrzeug (2) nach mindestens einem der vorhergehenden Ansprüche, **gekennzeichnet durch** mindestens ein Führungsmittel (20), durch das das Abdeckmittel (12) an dem Staufach (4) festlegbar ist und durch das das Überführen des Abdeckmittels (12) von der Verschlussstellung in die Freigabestellung und/oder umgekehrt führbar ist.

5. Neigefahrzeug (2) nach Anspruch 4, **dadurch gekennzeichnet, dass** das Überführen des Abdeckmittels (12) von der Verschlussstellung in die Freigabestellung und/oder umgekehrt eine Drehbewegung umfasst, wobei das Führungsmittel (20) ein Gelenk (18), ein Scharnier, ein Mehrgelenkscharnier und/oder Bügelscharnier umfasst und/oder dass das Überführen des Abdeckmittels (12) von der Verschlussstellung in die Freigabestellung und/oder umgekehrt eine lineare Bewegung umfasst, wobei das Führungsmittel (20) schienenartig oder stangenförmig ausgebildet ist.

6. Neigefahrzeug (2) nach einem der Ansprüche 4 oder 5, **dadurch gekennzeichnet, dass** die Unterstützungseinheit (14) zwischen Staufach (4) und Führungsmittel (20) angeordnet ist oder dass die Unterstützungseinheit (14) Element des Führungsmittels (20) ist.

7. Neigefahrzeug (2) nach mindestens einem der vorhergehenden Ansprüche, **dadurch gekennzeichnet, dass** die Unterstützungseinheit (14) mindestens ein Haltemittel (24) umfasst, das das Abdeckelement in der Verschlussstellung am Staufach (4) festlegt und/oder das bei Lösen des Abdeckelements aus der Verschlussstellung das Dämpferelement (22), das Federelement (16) und/oder den Antrieb auslöst.

8. Neigefahrzeug (2) nach Anspruch 7, **dadurch gekennzeichnet, dass** das Haltemittel (24) ein Drehfallschloss umfasst.

## Claims

1. Tilting vehicle (2) having at least one stowage compartment (4), which can be arranged in or on a vehicle housing (6) and which comprises at least one cavity (8) and at least one opening (10) making the cavity (8) accessible from outside, having at least one covering means (12) which, in a closed position, covers at least virtually the whole of the opening (10) of the stowage compartment (4) and which, in an open position, exposes the opening (10) to the outside, having at least one supporting unit (14), by means of which the transfer of the covering means (12) from the closed position into the open position and/or vice versa can at least be supported by a supporting force, wherein the supporting unit (14) comprises at least one damper element (22) and at least one spring element (16), **characterized in that** the stowage compartment is accessible from the side with respect to the longitudinal direction of the tilting vehicle (2) and **characterized by** at least one frame means (26), which can be fixed to the opening (10) of the stowage compartment (4) and which forms a receptacle (28) for the supporting unit (14) and/or the guide means (20), wherein the frame means (26) comprises a sealing element, which surrounds the cavity (8) of the stowage compartment (4) at least virtually completely at least in the closed position of the covering means (12).

2. Tilting vehicle (2) according to Claim 1, **characterized in that** the supporting unit (14) comprises at least one drive.

3. Tilting vehicle (2) according to Claim 1 or 2, **characterized in that** the at least one damper element (22) of the supporting unit (14) comprises an opening damper, a rotation damper, a linear damper and/or a gas spring, **in that** the at least one spring element (16) of the supporting unit (14) comprises at least one spring and/or spiral spring, and/or **in that** the at least one drive of the supporting unit (14) comprises at least one rack, a rope wrap, a spindle drive, a shape memory element and/or a direct drive.

4. Tilting vehicle (2) according to at least one of the preceding claims, **characterized by** at least one guide means (20), by which the covering means (12) can be fixed to the stowage compartment (4) and by which the transfer of the covering means (12) from the closed position into the open position and/or vice versa can be guided.

5. Tilting vehicle (2) according to Claim 4, **characterized in that** the transfer of the covering means (12) from the closed position to the open position and/or vice versa comprises a rotational movement, wherein the guide means (20) comprises a joint (18), a hinge, a multi-joint hinge and/or a bow hinge and/or **in that** the transfer of the covering means (12) from the closed position to the open position and/or vice versa comprises a linear movement, wherein the guide means (20) is hinge-like or rod-like.

6. Tilting vehicle (2) according to either of Claims 4 and 5, **characterized in that** the supporting unit (14) is arranged between the stowage compartment (4) and the guide means (20), or **in that** the supporting unit (14) is an element of the guide means (20).

7. Tilting vehicle (2) according to at least one of the preceding claims, **characterized in that** the supporting unit (14) comprises at least one holding means (24), which fixes the covering element in the closed position on the stowage compartment (4), and/or which, when the covering element is released from the closed position, triggers the damper element (22), the spring element (16) and/or the drive.

8. Tilting vehicle (2) according to Claim 7, **characterized in that** the holding means (24) comprises a rotary latch.

## Revendications

1. Véhicule inclinable (2) avec au moins un compartiment de rangement (4), qui peut être agencé dans ou sur une caisse de véhicule (6) et qui comprend au moins une cavité (8) et au moins une ouverture (10) rendant la cavité (8) accessible de l'extérieur, avec au moins un moyen de recouvrement (12), qui, dans une position de fermeture, recouvre au moins presque entièrement l'ouverture (10) du compartiment de rangement (4) et qui, dans une position de libération, libère l'ouverture (10) vers l'extérieur, avec au moins une unité d'assistance (14) par laquelle le passage du moyen de recouvrement (12) de la position de fermeture à la position de libération et/ou inversement peut être au moins assisté par une force d'assistance,
l'unité d'assistance (14) comprenant au moins un élément amortisseur (22) et au moins un élément à ressort (16), **caractérisé en ce que** le compartiment de rangement est accessible latéralement par rapport à la direction longitudinale du véhicule inclinable (2) et **caractérisé par** au moins un moyen de cadre (26), qui peut être fixé sur l'ouverture (10) du compartiment de rangement (4) et qui forme un logement (28) pour l'unité d'assistance (14) et/ou le moyen de guidage (20), le moyen de cadre (26) comprenant un élément d'étanchéité qui entoure au moins presque sur toute la circonférence la cavité (8) du compartiment de rangement (4) au moins dans la position de fermeture du moyen de recouvrement (12).

2. Véhicule inclinable (2) selon la revendication 1, **caractérisé en ce que** l'unité d'assistance (14) comprend au moins un entraînement.

3. Véhicule inclinable (2) selon la revendication 1 ou 2, **caractérisé en ce que** l'au moins un élément amortisseur (22) de l'unité d'assistance (14) comprend un amortisseur à ouverture, un amortisseur rotatif, un amortisseur linéaire et/ou un amortisseur à gaz, **en ce que** l'au moins un élément à ressort (16) de l'unité d'assistance (14) comprend au moins un ressort et/ou un ressort spiral et/ou **en ce que** l'au moins un entraînement de l'unité d'assistance (14) comprend au moins une crémaillère, une boucle de câble, un entraînement à broche, un élément à mémoire de forme et/ou un entraînement direct.

4. Véhicule inclinable (2) selon au moins l'une quelconque des revendications précédentes, **caractérisé par** au moins un moyen de guidage (20) par lequel le moyen de recouvrement (12) peut être fixé sur le compartiment de rangement (4) et par lequel le passage du moyen de recouvrement (12) de la position de fermeture à la position de libération et/ou inversement peut être guidé.

5. Véhicule inclinable (2) selon la revendication 4, **caractérisé en ce que** le passage du moyen de recouvrement (12) de la position de fermeture à la position de libération et/ou inversement comprend un mouvement de rotation, le moyen de guidage (20) comprenant une articulation (18), une charnière, une charnière à plusieurs articulations et/ou une charnière à étrier et/ou **en ce que** le passage du moyen de recouvrement (12) de la position de fermeture à la position de libération et/ou inversement comprend un mouvement linéaire, le moyen de guidage (20) étant configuré sous forme de rail ou de barre.

6. Véhicule inclinable (2) selon l'une quelconque des revendications 4 ou 5, **caractérisé en ce que** l'unité d'assistance (14) est agencée entre le compartiment de rangement (4) et le moyen de guidage (20) ou **en ce que** l'unité d'assistance (14) est un élément du moyen de guidage (20).

7. Véhicule inclinable (2) selon au moins l'une quelconque des revendications précédentes, **caractérisé en ce que** l'unité d'assistance (14) comprend au moins un moyen de maintien (24) qui fixe l'élément de recouvrement dans la position de fermeture sur le compartiment de rangement (4) et/ou qui, lors du détachement de l'élément de recouvrement hors de la position de fermeture, déclenche l'élément amortisseur (22), l'élément de ressort (16) et/ou l'entraînement.

8. Véhicule inclinable (2) selon la revendication 7, **caractérisé en ce que** le moyen de maintien (24) comprend un verrou rotatif.
